# EUROPÄISCHE PATENTSCHRIFT

(11) **EP 1 187 781 B1**
(45) Veröffentlichungstag und Bekanntmachung des Hinweises auf die Patenterteilung: **19.02.2003**
(21) Anmeldenummer: 00952885.2
(22) Anmeldetag: 02.06.2000
(51) Int. Cl.: B65G 43/02

(54) **EINRICHTUNG ZUR ÜBERWACHUNG EINER FÖRDERANLAGE**
DEVICE FOR MONITORING A CONVEYOR SYSTEM
DISPOSITIF POUR LA SURVEILLANCE D'UNE INSTALLATION DE TRANSPORT

(30) Priorität: 24.06.1999 DE 19929099
(43) Veröffentlichungstag der Anmeldung: 20.03.2002
(73) Patentinhaber: Phoenix AG, 21079 Hamburg (DE)
(72) Erfinder: KÜSEL, Bernd, D-21077 Hamburg (DE)
(86) Internationale Anmeldenummer: DE0002153
(87) Internationale Veröffentlichungsnummer: WO01000512

(56) Entgegenhaltungen:
- DE-A- 4 111 358
- DE-B- 1 233 323
- FR-A- 2 758 932
- JP-A- 59 092 818
- US-A- 4 056 234
- US-A- 4 939 378

## Beschreibung

Die Erfindung betrifft eine Einrichtung zur Überwachung einer Förderanlage, umfassend
- eine Aufgabestelle, wo das Fördermaterial von einem aufgebenden ersten Fördergurt auf einen aufnehmenden zweiten Fördergurt fällt, wobei der erste und zweite Fördergurt aus elastomerem Werkstoff mit eingebetteten Zugträgern besteht, wobei ferner im Bereich der Aufgabestelle eine Aufgabeschurre angeordnet ist; sowie
- sonstige Anlagenteile, nämlich Antriebstrommel, Umkehrtrommel, Tragrollen, Traggerüste sowie gegebenenfalls weitere Bauteile.

Mit der gattungsgemäßen Einrichtung sind folgende zwei Problemkreise verbunden:
A) Das Fördermaterial umfaßt kleine wie auch große Förderstücke. Bei großen Förderstücken, beispielsweise Erz, Abraum und Gestein, besteht nun die Gefahr, daß sich diese in der Schurre verklemmen. Die hiermit verbundene Reibung führt dann häufig zu einem raschen, vorzeitigen Verschleiß der Deckplatte des Fördergurtes. Auch kann es infolge von Reibungswärme und Funkenbildung zu Bränden kommen, was unter Tage eine besonders große Gefahr darstellt.
   Ferner kann es zu Überschüttungen von Fördermaterial kommen. Der Förderstau wird dabei um das blockierte Materialstück herum umgeleitet und fällt dadurch neben die Förderanlage oder auf den Untergurt, was zu erheblichen Beschädigungen des Fördergurtes führen kann, indem beispielsweise das Fördermaterial zwischen Fördergurt und Antriebs- oder Umlenktrommel gerät und sich von unten durch den Fördergurt drückt.
   In der Druckschrift DE-A-42 40 094 wird nun eine Einrichtung zur Überwachung eines Fördergutstromes einer Förderanlage beschrieben, wobei die Förderanlage so gesteuert wird, daß bei maximaler Auslastung der Förderanlage der Schieflauf des Gurtbandes vermieden und der Verschleiß minimiert werden. Die Einrichtung besteht dabei aus einer Lichtquelle, die ein Lichtband auf den Fördergutstrom projiziert, wobei eine zusätzliche Kamera einen hierdurch abgebildeten Oberkantenverlauf eines Fördergutes sowie eines Gurtbandes erfaßt. Eine Bildauswertungseinheit analysiert dann den Oberkantenverlauf.
   Diese Einrichtung ist sehr aufwendig konzipiert und zudem äußerst störanfällig. Außerdem ist bei einem heterogenen Fördermaterial mit kleinen, mittelgroßen und sehr großen Förderstücken der Oberkantenverlauf nur unzureichend zu ermitteln. Die Analyse mittels der Bildauswertungseinheit ist somit mit Fehlerquellen behaftet.
   Außerdem ist mit dieser Einrichtung nicht der Problemkreis (B) erfaßbar.
B) Durch Fremdkörper kann es vereinzelt zu Penetrationen des Fördergurts kommen. Fremdkörper können Schurrenteile, Tragrollen und andere Bauteile der Förderanlage sein. Auch Werkzeuge, Abstechreste in Gießereien und scharfkantige Materialien, die sich im geförderten Gut befinden, sind Gefahrenquellen.
   Bei ungünstigem Auftreffen eines Fremdkörpers auf den Fördergurt kann es zum Verklemmen des Körpers in einem Anlagenteil kommen. Der Fördergurt wird durchstoßen und läuft nahezu ungehindert weiter, weil die Fördergurtantriebskraft wesentlich höher ist als der Widerstand des Fördergurts gegenüber dem verklemmten Fremdkörper. Diese Situation hat die Längsschlitzung des Fördergurtes zur Folge. Eine Reparatur des Fördergurtes ist dann in den meisten Fällen nicht möglich oder unwirtschaftlich. Der entstandene Schaden ist beträchtlich.
   Methoden zur Vermeidung derartiger Schlitzungen bestehen vorrangig aus Aktivsystemen, wie in die Deckplatten des Fördergurts integrierte Querarmierungen, oder Passivsystemen (z.B. Leiterschleifen und/oder Transponder, DE-C-44 44 264), die in definierten Abständen - beispielsweise 50 m - in den Fördergurt (Deckplatte, Karkasse) einvulkanisiert werden. Bei Beschädigung einer Leiterschleife wird ein elektroinduktiver Stromkreis unterbrochen, was über Detektoren zum Abschalten der Förderanlage führt.
   Querarmierungen können den Widerstand gegen Schlitzungen beträchtlich erhöhen. Trotzdem kann es zu den oben beschriebenen Beschädigungen kommen.
   Leiterschleifen bestehen aus feinen Metallcorden, die empfindlich auf äußere Einflüsse, wie ständige Aufschläge sowie Längs- und Querbiegewechsel, reagieren. Es kommt häufig zu Fehlmeldungen. Ihre Lebensdauer ist sehr begrenzt
   Außerdem ist diese Methode nicht zur Erfassung des Problemkreises (A) geeignet, da eine Materialblockade durch ein übergroßes Förderstück nicht zwangsläufig zu einer Penetration führen muß.

Die Aufgabe der Erfindung besteht nun darin, für den gesamten Problemkreis (A, B) eine Einrichtung zur Überwachung einer Förderanlage bereit zu stellen, die verschleißfrei, wartungsarm und bei möglichst geringem technischen Aufwand wirtschaftlich ist.

Gelöst wird diese Aufgabe gemäß Kennzeichen des Patentanspruches 1 dadurch, daß die Einrichtung im Problembereich, insbesondere im Bereich der Aufgabestelle, wo es zu einer Materialblockade und/oder zu einer Fördergurtpenetration durch einen Fremdkörper kommen kann, mit einem opto-elektronischen System versehen ist, das mit einem Prozeßrechner gekoppelt ist, der mit Hilfe eines Bildauswertungsprogramms stillstehende Körper erfaßt, was wiederum im Störfall einen akustischen und/oder optischen Warnhinweis auslöst oder eine automatische Abschaltung der Förderanlage bewirkt, bevor es zu größeren Beschädigungen kommt.

Zweckmäßige Ausgestaltungen der Erfindung sind in den Patentansprüchen 2 bis 5 genannt.

Die Erfindung wird nun anhand von Ausführungsbeispielen unter Bezugnahme auf schematische Zeichnungen erläutert. Es zeigen:
- Fig. 1: eine Draufsicht einer Förderanlage mit Materialblockade gemäß Problemkreis (A);
- Fig. 2: eine Vorderansicht einer Förderanlage mit Materialblockade gemäß Problemkreis (A);
- Fig. 3: eine Seitenansicht einer Förderanlage mit eingeklemmtem Fördermaterial im Bereich der Antriebstrommel gemäß Problemkreis (A);
- Fig. 4: eine Draufsicht einer Förderanlage mit gurtschlitzendem Fremdkörper gemäß Problemkreis (B);
- Fig. 5: eine Seitenansicht einer Förderanlage mit gurtschlitzendem Fremdkörper gemäß Problemkreis (B);
- Fig. 6: eine Vorderansicht einer Förderanlage mit gurtschlitzendem Fremdkörper gemäß Problemkreis (B);
- Fig. 7: eine Draufsicht einer Förderanlage mit zwei Kameras;
- Fig. 8: eine Vorderansicht einer Förderanlage mit einer Kamera, die am Traggerüst angebracht ist;
- Fig. 9: das Funktionsprinzip des opto-elektronischen Systems, umfassend eine Kamera, einen Prozeßrechner und eine Antriebssteuerung.

In Verbindung mit diesen Figuren gilt folgende Bezugsziffernliste:
- **1**: Aufgabestelle
- **2**: aufgebender erster Fördergurt
- **3**: aufnehmender zweiter Fördergurt
- **4**: Fördermaterial / Materialstück
- **5**: Aufgabeschurre
- **6**: Traggerüst
- **7**: Materialblockade
- **8**: Tragrolle
- **9**: Beschädigungspunkt
- **10**: Untergurt
- **11**: Obergurt
- **12**: Antriebstrommel
- **13**: gurtschlitzender Fremdkörper
- **14**: Gurtschlitz
- **15**: opto-elektronisches System (digitale Zeilen- oder Flächenkamera **u, v, w**)
- **16**: Erfassungsbereich des opto-elektronischen Systems
- **17**: Zugträger aus Stahlseilen
- **18**: Prozeßrechner
- **19**: Antriebssteuerung

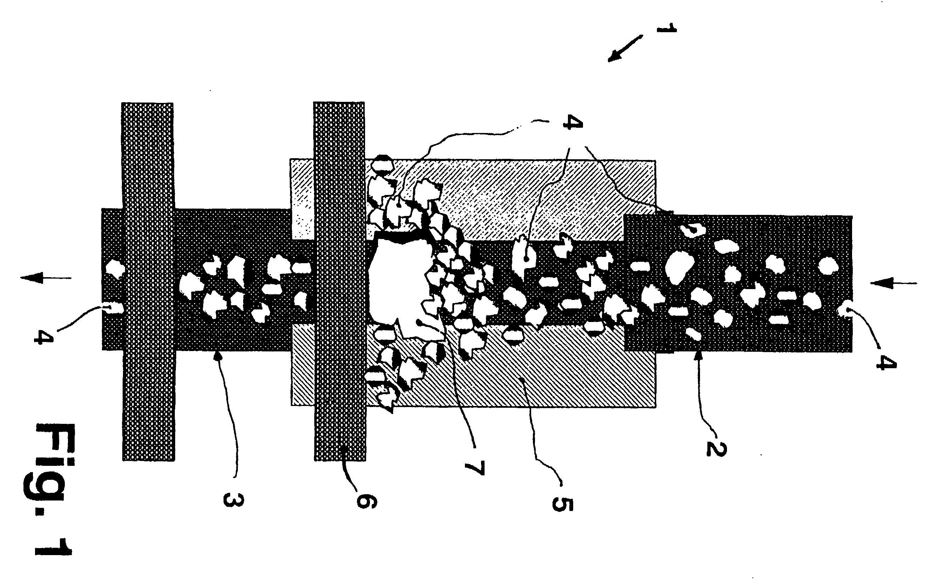

Fig. 1 zeigt eine Förderanlage mit Aufgabestelle **1,** wo das Fördermaterial **4** von einem aufgebenden ersten Fördergurt **2** auf einen aufnehmenden zweiten Fördergurt **3** fällt. Im Bereich dieser Aufgabestelle ist eine Aufgabeschurre **5**, gebildet aus zwei beidseitig angeordneten Schurrenbleche, vorhanden. In Laufrichtung (Pfeilrichtung) des Fördergurtes ist nun von dem Traggerüst **6** zwischen den beiden Schurrenblechen eine Materialblockade **7** durch ein übergroßes festsitzendes Fördergutstück entstanden. Das Fördermaterial **4** wird dabei um die Materialblockade herum geführt, und zwar unter Weitertransport und/oder Auswurf über die Schurrenbleche hinweg.

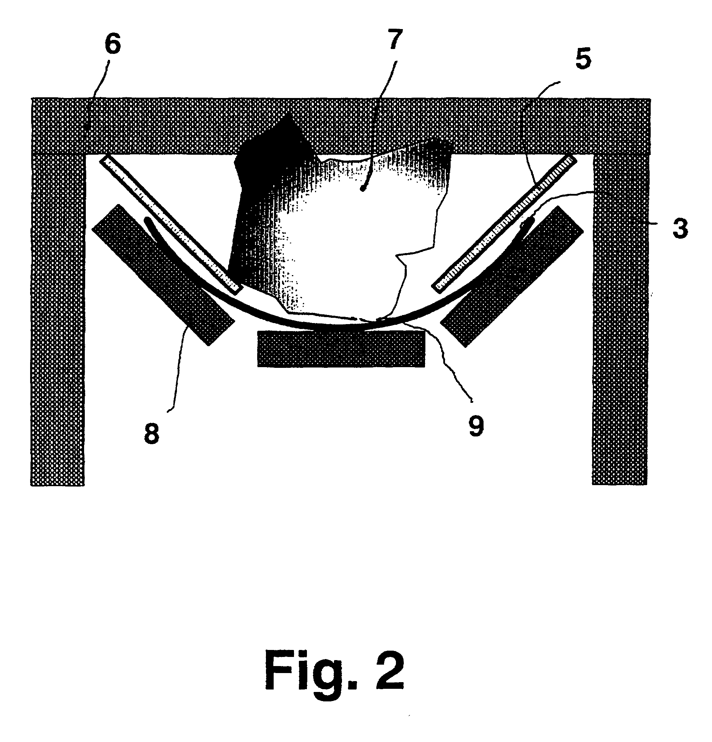

Fig. 2 verdeutlicht aus einem anderen Blickwinkel nochmals die Materialblockade **7** im Bereich der Aufgabeschurre **5** des Traggerüstes **6**. Die Materialblockade weist dabei einen potentiellen Beschädigungspunkt **9** für den Fördergurt **3** auf, der gemuldet auf den Tragrollen **8** läuft.

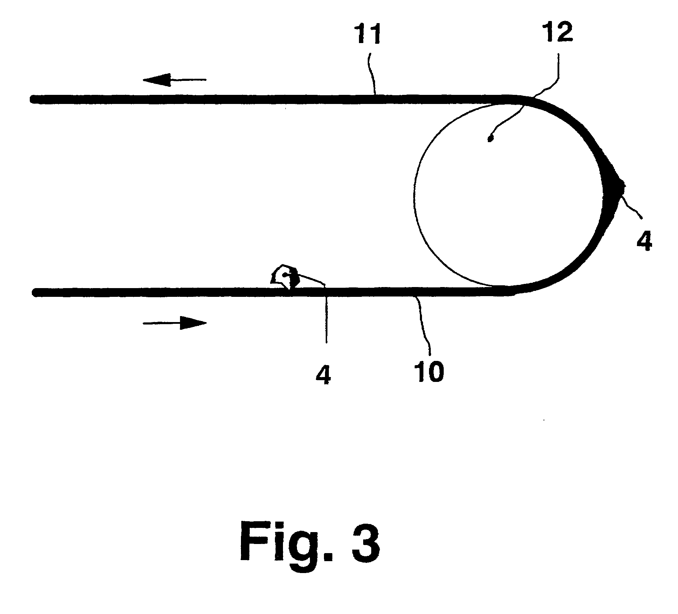

Fig. 3 zeigt nun eine mögliche Folge einer Materialblockade. Ein Materialstück **4** ist auf den Untergurt **10** gefallen. Bei der Antriebstrommel **12**, die hier zugleich die Umkehrtrommel ist, geht der Untergurt **10** in den Obergurt **11** über. Das in Förderrichtung (Pfeilrichtung) mitgeschleppte Materialstück **4** gerät nun zwischen Fördergurt und Antriebstrommel, wobei sich dieses von unten durch den Fördergurt drückt.

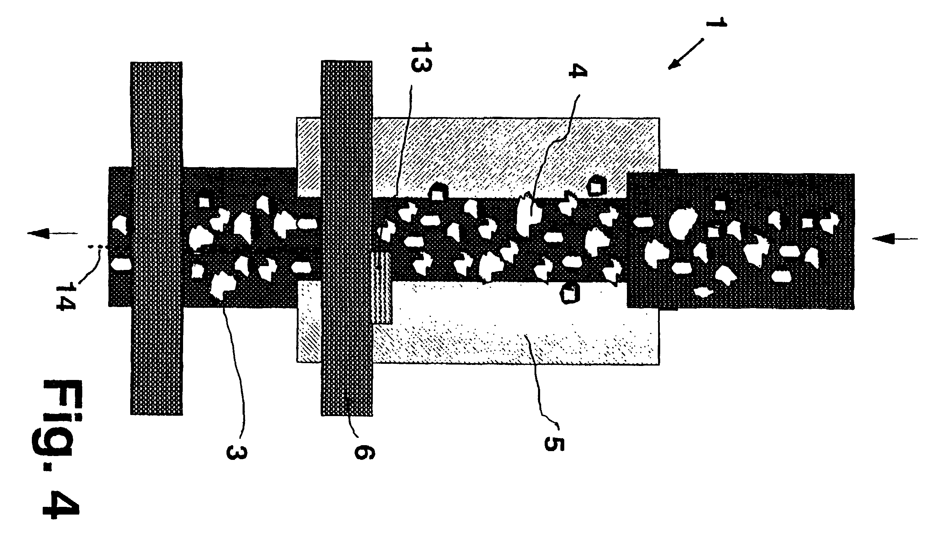

Fig. 4 zeigt im wesentlichen die gleiche Förderanlage gemäß Fig. 1, allerdings mit dem Unterschied, daß anstelle der Materialblockade ein gurtschlitzender Fremdkörper **13** am Traggerüst **6** festsitzt, und zwar unter Bildung eines Gurtschlitzes **14** (punktierte Linie).

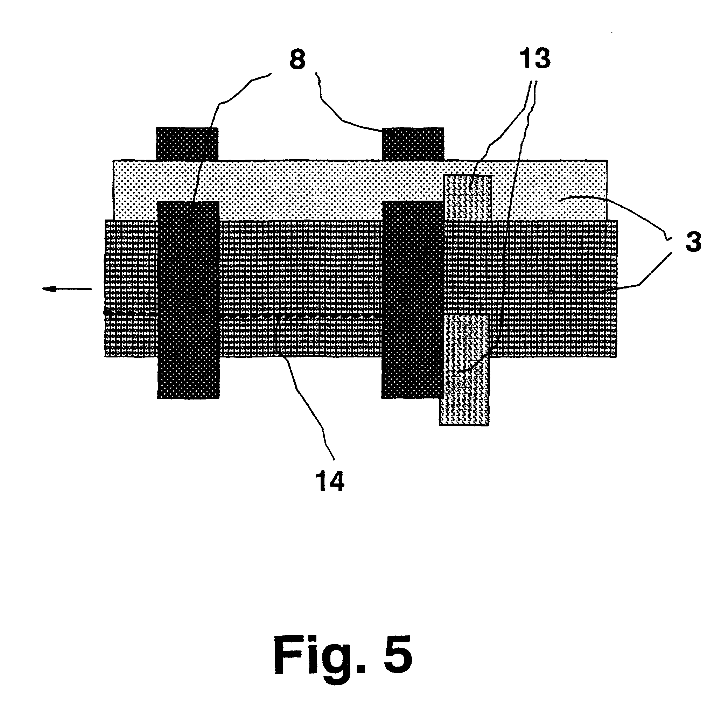

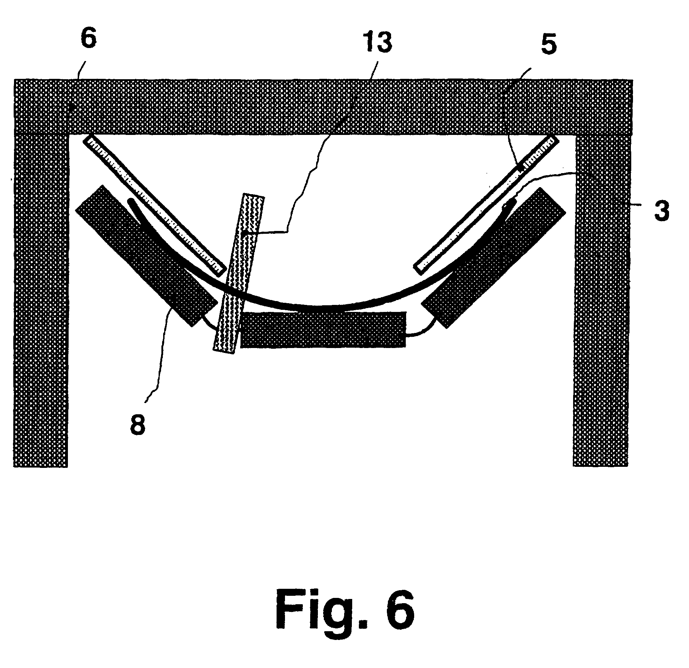

Die Fig. 5 und 6 zeigen nochmals aus zwei anderen Blickwinkeln den Gurtschlitz **14** (Fig. 5, punktierte Linie) des Fördergurtes **3**, der von dem eindringenden Fremdkörper **13** (Fig. 6) verursacht wurde.

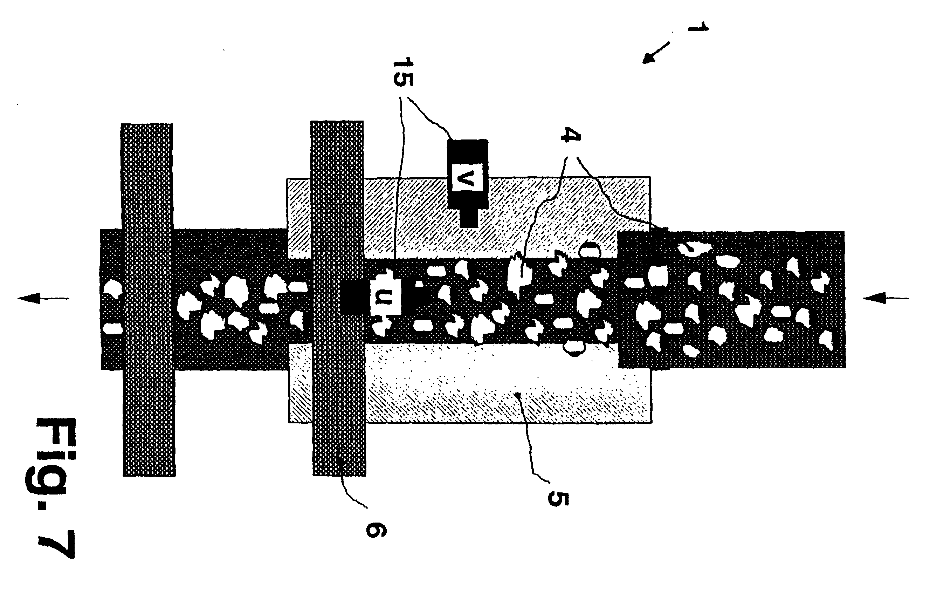

Fig. 7 zeigt nun eine Förderanlage, die im Bereich der Aufgabestelle **1** mit zwei digitalen Zeilen- oder Flächenkameras **u** und **v** als opto-elektronisches System **15** ausgestattet ist, wobei eine Kamera **u** am Traggerüst **6** montiert ist, während die andere Kamera **v** oberhalb der Aufgabeschurre **4** angeordnet ist. Durch die zwei unterschiedlichen Blickwinkel der beiden Kameras **u** und **v** wird die Aufgabestelle optimal erfaßt.

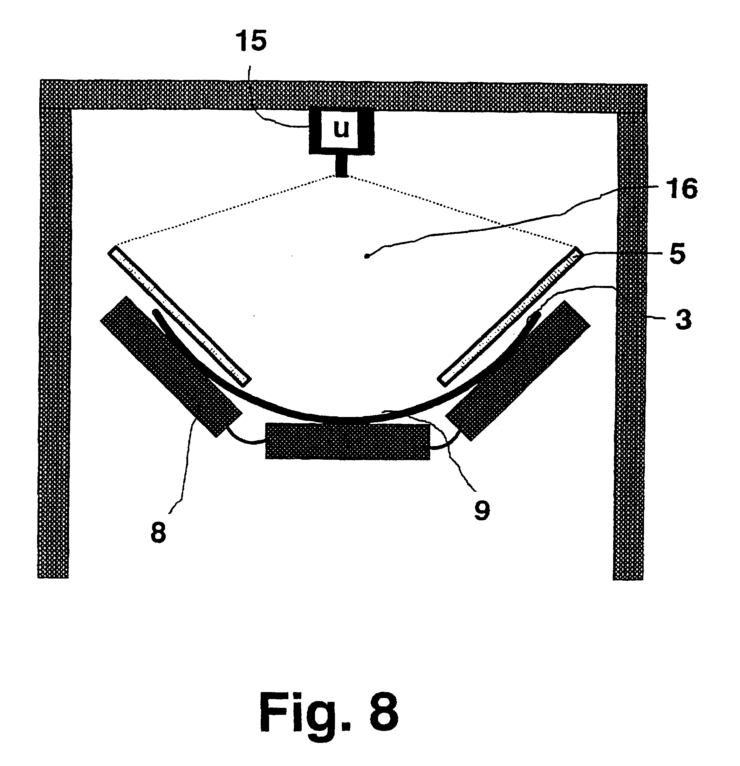

Fig. 8 zeigt nochmals den Erfassungsbereich **16** des opto-elektornischen Systems **15**, und zwar in bezug auf die Kamera **u**, die am Traggerüst **6** montiert ist. Der Erfassungsbereich geht dabei bis zur Oberkante der Aufgabenschurre **5**, wobei der potentielle Beschädigungspunkt **9** beobachtet wird.

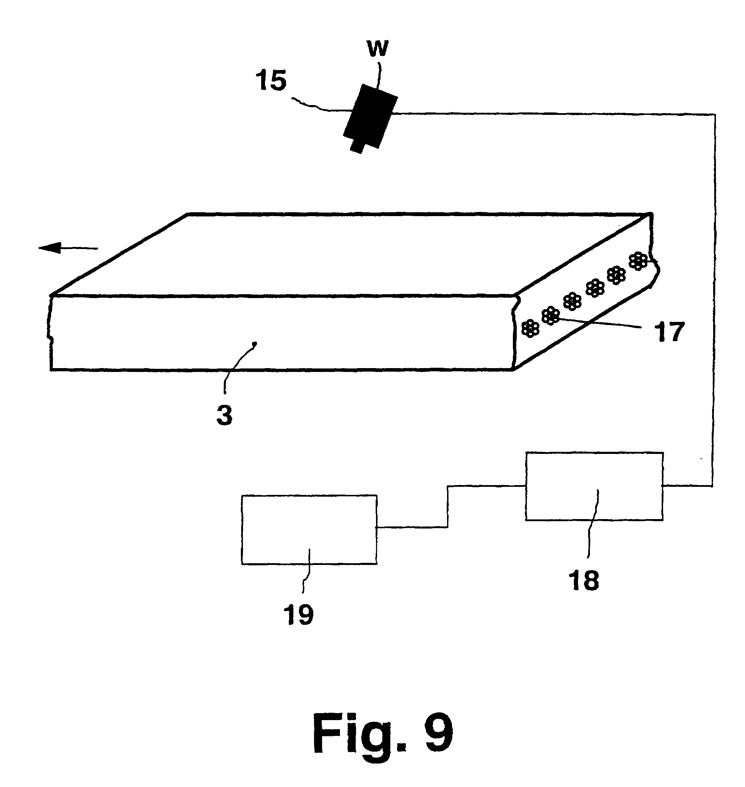

Fig. 9 zeigt anhand eines Fördergurtes **3** mit eingebetteten Zugträgern **17** das Funktionsprinzip des opto-elektronischen Systems **15**, umfassend eine Kamera **w**, einen Prozeßrechner **18** und eine Antriebssteuerung **19**. Dieses Funktionsprinzip wird nun näher erläutert.

Ein an die Kamera **w** angeschlossener Prozeßrechner **18** bestimmt mit Hilfe eines Bildauswertungsprogramms stillstehende Körper. Stillstehende Körper stellen immer eine Gefahrenquelle auf einem laufenden Fördergurt dar. Nach Ablauf einer individuell eingestellten Zeit, üblicherweise liegt sie zwischen 5 und 20 Sekunden, führt die Detektion des Objekts zu einem Signal, das vom Rechner entweder in einen akustischen und/oder optischen Warnhinweis umgewandelt wird oder den Notstopp der Förderanlage auslöst.

Eine Änderung des Fördergutstroms wird von dem opto-elektronischen System **15** zusätzlich erkannt. Der Prozeßrechner nimmt in einem automatischen Lernverfahren den üblichen Fördergutstrom auf und signalisiert Abweichungen davon. Die Toleranz kann individuell programmiert werden.

Zur Erkennung des Stillstehens von Fördermaterial erhält der Rechner beispielsweise von einem rotierenden Teil der Förderanlage, vorzugsweise von der Antriebs- oder Umkehrtrommel, ein Bewegungssignal. Bei ruhendem Fördergurt findet keine Kameraüberwachung statt.

Ferner ist es vorteilhaft, wenn das opto-elektronische System mit einer Freiblasvorrichtung verbunden ist. Auf diese Weise wird die Optik sauber gehalten.

## Patentansprüche

1. Einrichtung zur Überwachung einer Förderanlage, umfassend
- eine Aufgabestelle (1), wo das Fördermaterial von einem aufgebenden ersten Fördergurt (2) auf einen aufnehmenden zweiten Fördergurt (3) fällt, wobei der erste und zweite Fördergurt aus elastomerem Werkstoff mit eingebetteten Zugträgern (17) besteht, wobei ferner im Bereich der Aufgabestelle eine Aufgabeschurre (5) angeordnet ist; sowie
- sonstige Anlagenteile, nämlich Antriebstrommel (12), Umkehrtrommel, Tragrollen (8), Traggerüste (6) sowie gegebenenfalls weitere Bauteile;
**dadurch gekennzeichnet, daß**
- die Einrichtung im Problembereich, insbesondere im Bereich der Aufgabestelle (1), wo es zu einer Materialblockade (7) und/oder zu einer Fördergurtpenetration durch einen Fremdkörper (13) kommen kann, mit einem opto-elektronischen System (15) versehen ist, das mit einem Prozeßrechner (18) gekoppelt ist, der mit Hilfe eines Bildauswertungsprogramms stillstehende Körper erfaßt, was wiederum im Störfall einen akustischen und/oder optischen Warnhinweis auslöst oder eine automatische Abschaltung der Förderanlage bewirkt, bevor es zu größeren Beschädigungen kommt.

2. Einrichtung nach Anspruch 1, **dadurch gekennzeichnet, daß** das opto-elektronische System (15) wenigstens eine digitale Zeilen- oder Flächenkamera (u, v, w) umfaßt, insbesondere in Form einer digitalen Zeilenkamera.

3. Einrichtung nach Anspruch 1 oder 2, **dadurch gekennzeichnet, daß** das opto-elektronische System (15) so montiert ist, daß es den gesamten Problembereich, insbesondere den gesamten Bereich der Aufgabestelle (1), erfaßt.

4. Einrichtung nach einem der Ansprüche 1 bis 3, **dadurch gekennzeichnet, daß** das opto-elektronische System (15) mit einer Antriebssteuerung (19) gekoppelt ist, und zwar zwecks automatischer Abschaltung der Förderanlage

5. Einrichtung nach einem der Ansprüche 1 bis 4, **dadurch gekennzeichnet, daß** das opto-elektronische System (15) mit einer Freiblasvorrichtung verbunden ist.

## Claims

1. Device for monitoring a conveyor installation, comprising
- a feeding station (1) where the material being conveyed falls from a feeding first conveyor belt (2) on to a receiving second conveyor belt (3), the first and second conveyor belts being made of elastomer material with embedded tensile members (17), further with a feeding chute (5) arranged in the area of the feeding station,
- and miscellaneous installation parts, namely driving drums (12), reversing drums, supporting rollers (8), supporting frames (6) and possibly further components,
**characterised in that**
- in the problem area, in particular in the area of the feeding station (1) where a material blockage (7) and/or conveyor belt penetration by a foreign body (13) can occur, the device is provided with an opto-electronic system (15) which is coupled with a process computer (18) which detects stationary bodies with the aid of an image evaluation programme, which again in the event of a fault triggers an acoustic and/or optical warning or causes the automatic shut-down of the conveyor installation before major damage occurs.

2. Device according to claim 1, **characterised in that** the opto-electronic system (15) comprises at least one digital line or area camera (u, v, w), in particular in the form of a digital line camera.

3. Device according to claim 1 or 2, **characterised in that** the opto-electronic system (15) is mounted so that it covers the entire problem area, in particular the entire area of the feeding station (1).

4. Device according to one of claims 1 to 3, **characterised in that** the opto-electronic system (15) is coupled with a drive control (19), for the purpose of automatic shut-down of the conveyor installation.

5. Device according to one of claims 1 to 4, **characterised in that** the opto-electronic system (15) is combined with a compressed-air clearing device.

## Revendications

1. Dispositif pour la surveillance d'une installation de transport, comprenant :
- un poste d'alimentation (1), où le matériau à transporter tombe, d'une première courroie de transporteur (2) d'alimentation sur une deuxième courroie de transporteur (3) réceptrice, les première et deuxième courroies de transporteur étant formées d'un matériau élastomère dans lequel sont noyés des supports de traction (17), où, en outre, une goulotte d'alimentation (5) est disposée dans la zone du point d'alimentation ; ainsi que
- d'autres parties d'installation, précisément un tambour d'entraînement (12), un tambour de renvoi, des rouleaux support (8), des bâtis support (9), ainsi que, le cas échéant, d'autres composants ;
**caractérisé en ce que**
- dans la zone posant problème, en particulier dans la zone du point d'alimentation (1), où peut se produire un blocage du matériau (7) et/ou une pénétration de la courroie de convoyeur par un corps étranger (13), le dispositif est muni d'un système (15) optoélectronique qui est couplé à un ordinateur de processus (18), détectant des corps stationnaires à l'aide d'un programme d'évaluation d'image, qui à son tour, en cas de perturbation, déclenche une alarme acoustique et/ou optique, ou provoque une mise hors service automatique de l'installation de transport, avant que des dégâts plus importants se produisent.

2. Dispositif selon la revendication 1, **caractérisé en ce que** le système (15) optoélectronique comprend au moins une caméra numérique à lignes ou à éléments de surface (u, v, w), en particulier réalisée sous la forme d'une caméra numérique à lignes.

3. Dispositif selon la revendication 1 ou 2, **caractérisé en ce que** le système (15) optoélectronique est monté de manière à détecter l'ensemble de la zone à risque de problème, en particulier l'ensemble de la zone du point d'alimentation (1).

4. Dispositif selon l'une des revendications 1 ou 3, **caractérisé en ce que** le système (15) optoélectronique est couplé à une commande d'entraînement (19) et précisément dans le but d'une mise hors service automatique de l'installation de transport.

5. Dispositif selon l'une des revendications 1 à 4, **caractérisé en ce que** le système (15) optoélectronique est relié à un dispositif de dégagement par soufflage.
